## Europäisches Patentamt
## European Patent Office
## Office européen des brevets

(19)

(11) Veröffentlichungsnummer: **0 120 447**
**B2**

(12) NEUE EUROPÄISCHE PATENTSCHRIFT

(45) Veröffentlichungstag der neuen Patentschrift:
**12.09.90**

(21) Anmeldenummer: **84103082.8**

(22) Anmeldetag: **21.03.84**

(51) Int. Cl.⁵: **C 08 F 6/00,** C 08 G 85/00,
B 29 C 45/17, B 29 C 47/00

(54) Verfahren und Vorrichtung zum Entfernen von flüchtigen Anteilen aus Polymerschmelzen oder Pasten.

(30) Priorität: **24.03.83 DE 3310676**

(43) Veröffentlichungstag der Anmeldung:
**03.10.84 Patentblatt 84/40**

(45) Bekanntmachung des Hinweises auf die
Patenterteilung:
**12.09.90 Patentblatt 90/37**

(45) Bekanntmachung des Hinweises auf die
Entscheidung u"ber den Einspruch:
**13.08.86 Patenblatt 86/33**

(84) Benannte Vertragsstaaten:
**BE CH DE FR GB IT LI NL**

(56) Entgegenhaltungen:
EP-A-0 068 561
CH-A- 387 939
DE-B-1 729 395
FR-A-1 581 668
US-A-2 712 799

Die Akte enthält technische Angaben, die nach
dem Eingang der Anmeldung eingereicht
wurden und die nicht in dieser Patentschrift
enthalten sind.

(73) Patentinhaber: **BASF Aktiengesellschaft**
**Carl-Bosch-Strasse 38**
**D-6700 Ludwigshafen (DE)**

(72) Erfinder: **Pipper, Gunter**
**Schlangenthaler Weg 10**
**D-6702 Bad Duerkheim (DE)**
Erfinder: **Riegger, Siegfried, Dr.**
**Reilinger Weg 27**
**D-6800 Mannheim 81 (DE)**
Erfinder: **Floss, Josef Georg, Dr.**
**Im Kaestenbusch 2**
**D-6730 Neustadt (DE)**

EP 0 120 447 B2

**Beschreibung**

Das Entbinden von flüchtigen Anteilen aus Polymerschmelzen zählt zu den wichtigsten Verfahrensschritten beim Herstellen und Aufbereiten von Polymeren. Die zu entfernenden flüchtigen Anteile sind z.B. Wasser, Lösungsmittel, Monomere, Oligomere, inerte Gase und Reaktionsprodukte. Wegen der großen installierbaren wärmeübertragenden Fläche, der guten Energieverteilung und Oberflächenerneuerung der zu verarbeitenden Polymeren sind Schneckenextruder für den Entgasungsschritt hervorragend geeignet. Hierbei muß ein sicheres Abführen der Dampfströme im Bereich der Entgasungszone gewährleistet sein, weil sonst die Gefahr des Überflutens der Entgasungsöffnungen sowie des Mitreißens von Polymerteilchen besteht. Dies führt dazu, daß sich in den Entgasungsöffnungen Polymere ablagern und vercracken, die wiederum zu einer Verschmutzung des zu entgasenden Polymeren führen. Es wurden schon eine Reihe von Versuchen unternommen dieses Problem zu lösen, durch Verengen der Entgasungsöffnungen mittels horizontaler Auslaufkante und Einzugstasche sowie durch Zwickelabdeckung und Einzugstasche. Hierdurch wird jedoch der Querschnitt der Entgasungsöffnung wesentlich verkleinert, ohne daß das anstehende Problem endgültig gelöst wird. Bei sehr hohen Dampfgeschwindigkeiten, oder falls das Polymere sehr stark zum Schäumen neigt, hat man auch schon die Entgasungsöffnungen mit selbstreinigenden Stopfschnecken ausgerüstet, durch die die hochsteigende Schmelze wieder zurückgedrängt wird. Solche Stopfschnecken sind jedoch sehr aufwendig.

Es war deshalb die technische Aufgabe gestellt, das Entfernen von flüchtigen Anteilen aus Polymerschmelzen so zu gestalten, daß keine Crackprodukte aus den Entgasungsöffnungen in die Polymerschmelze zurückgelangen können.

Diese Aufgabe wird gelöst in einem Verfahren zum Entfernen von flüchtigen Anteilen aus Polymerschmelzen, wobei man die flüchtige Anteile enthaltenden Polymeren unter fortwährender Ausbildung neuer Oberflächen durch mindestens eine Zone, in der die flüchtigen Anteile verdampfen, leitet und die flüchtigen Anteile entfernt, dadurch gekennzeichnet, daß man die flüchtigen Anteile aus der bzw. den Zonen, in denen die flüchtigen Anteile verdampfen, jeweils durch eine poröse Platte, die eine Vielzahl von Porenöffnungen mit einem Durchmesser von 5 bis 200 µm aufweist, ableitet.

Ferner ist im Gegenstand der Erfindung eine Vorrichtung zum Entfernen von flüchtigen Anteilen, bestehend aus einem Extrudergehäuse 1 mit einer Einlaßöffnung 2 für flüchtige Anteile enthaltende Polymerschmelzen, einer Austragsöffnung 3, mindestens einer Entgasungsöffnung 4 und mindestens einer Schneckenwelle 5, dadurch gekennzeichnet, daß in jeder Entgasungsöffnung 4 eine poröse Platte 6 angeordnet ist, die den gesamten Querschnitt der Entgasungsöffnung abdeckt und eine Vielzahl Porenöffnungen mit einem Durchmesser von 5 bis 200 µm aufweist und die poröse Platte senkrecht zu den Schneckenwellen verschiebbar ist und ein Spalt zwischen der porösen Platte und dem äußeren Schneckendurchmesser besteht.

Das neue Verfahren und die neue Vorrichtung haben den Vorteil, daß auf einfache Weise das Zurückfließen von Crackprodukten aus der Entgasungsöffnung in die Polymerschmelze wirksam verhindert wird.

Erfindungsgemäß geht man von Polymerschmelzen aus, die flüchtige Anteile enthalten, wie Wasser, Lösungsmittel, Monomere, Oligomere, inerte Gase oder Reaktionsprodukte.

Solche flüchtigen Anteile können in den Polymerschmelzen in Mengen z.B. von 0,1 bis 50 Gew.%, bezogen auf die Menge an Polymeren und flüchtigen Anteilen enthalten sein. Geeignete Polymere, die flüchtige Anteile enthalten sind beispielsweise Polyamide wie Polyamid-6 und Polyamid-66, Styrolpolymerisate wie Polystyrol, Styrolacrylnitril-Copolymerisate, sowie Styrolpolymerisate und dessen Copolymerisate, die mit Kautschuk modifiziert sind, ferner Polyolefine. Typische Ausgangsstoffe sind beispielsweise Polyamid-6 mit einem Gehalt an Monomeren und Oligomeren von bis zu 15 Gew.%, Polyamid-66 mit einem Gehalt an flüchtigen Anteilen wie Wasser und flüchtigen Aminen von bis zu 10 Gew.%, Polystyrol mit einem Gehalt an Monomeren, Oligomeren und gegebenenfalls Lösungsmitteln, wie Ethylbenzol von bis zu 40 Gew.% Styrolacrylnitril-Copolymerisate mit einem Gehalt an Monomeren und Oligomeren und gegebenenfalls Lösungsmitteln von bis zu 50 Gew.% oder Polyethylen mit einem Gehalt an flüchtigen Anteilen von bis zu 10 Gew.% Die flüchtigen Anteile können auch durch Abspaltung bei der Kondensation, z.B. bei Polyamiden aus Diaminen und Dicarbonsäuren oder Polyestern wie Polyethylenterephthalat oder Polybutylenterephthalat, oder durch Abbau instabiler Anteile des Polymeren wie bei Polyoxymethylen entstehen.

Besonders bevorzugte Ausgangsstoffe sind Polyamide, die flüchtige Anteile enthalten.

Die angewandte Temperatur richtet sich im wesentlichen nach dem Schmelzpunkt des jeweils angewandten Polymeren, bzw. dessen Verarbeitungstemperatur und dem Siedepunkt der flüchtigen Anteile. In der Regel wendet man Temperaturen von 150 bis 280°C an. Bei Polyamid-6 hält man vorteilhaft eine Temperatur von 230 bis 270°C und bei Polyamid-66 wendet man vorteilhaft eine Temperatur von 270 bis 280°C an.

Die flüchtigen Anteile enthaltenden Polymeren werden in schmelzflüssigem Zustand unter fortwährender Ausbildung neuer Oberflächen durch mindestens eine Zone in der die flüchtigen Anteile verdampfen und die vorteilhaft unter vermindertem Druck steht, geleitet und die flüchtigen Anteile dampfförmig entfernt. Vorteilhaft führt man das Verfahren in Schneckenextrudern mit Entgasungseinrichtungen durch. Dem Extruder kann das flüchtige Anteile enthaltende Polymere als Granulat zugeführt werden. In diesem Fall wird das Polymere im Schneckenextruder aufgeschmolzen und im Entgasungteil durch die Entgasungsöffnung die flüchtigen. Anteile vorteilhaft unter vermindertem Druck entfernt. Andererseits ist es auch möglich, dem Extruder die flüchtige Anteile enthaltenden Polymeren bereits als Schmelze, wie sie bei der Polymerisation anfallen, zuzuführen. Der Druck richtet sich nach dem Siedepunkt der zu entfernenden flüchtigen Anteile und der Menge an flüchtigen Anteile, die im Polymeren belassen werden dürfen. Die flüchtigen Anteile werden im dampfförmigen Zustand unter Verminderung des Drucks durch sogenannte Entgasungsöffnungen entfernt. In der Zone, in der die flüchtigen Anteile verdampft werden, d.h. der Entgasungszone, wendet man vorzugsweise einen Druck von ca. 1 bis 1000 mbar an. Falls man größere Mengen an flüchtigen Anteile entfernen muß, oder der Gehalt an flüchtigen Anteile im Polymeren möglichst niedrig sein soll, hat es sich als zweckmäßig erwiesen, die flüchtige Anteile enthaltende Polymerschmelze durch mehrere, z.B. zwei hintereinander geschaltete Zonen, in der die flüchtigen Anteile verdampft werden, zu lieten.

Erfindungsgemäß leitet man die flüchtigen Anteile aus der oder den Zonen, in der die flüchtigen Anteile verdampft werden, jeweils durch eine poröse Platte, die eine Vielzahl von Porenöffnungen mit einem Durchmesser von 5 bis 200 µm aufweist, ab. Geeignet hierfür sind poröse Platten, wie Sinterplatten, z.B. aus Metall, Keramik oder hochschmelzenden Polymeren, ferner Platten aus Metallfasern. Besonders bevorzugt werden Sinterplatten aus Metall oder Metallfaserplatten verwendet. Die Porenöffnungen haben einen Durchmesser von 5 bis 200 µm und die Porosität beträgt vorteilhaft 25 bis 60%. Die porösen Platten bilden zweckmäßig einen Teil der Gehäusewand und sind dieser in der Form angepaßt, d.h. die Entgasungsöffnung wird im gesamten Querschnitt durch eine Sinterplatte, die der Form des Gehäuses angepaßt ist, gegenüber der Polymerschmelze oder Paste abgedeckt. Durch den Druck können durch die feinen Poren der Sinterplatte zwar die flüchtigen Anteile entfernt werden, während die Schmelze nicht oder nur zu einem sehr untergeordneten Teil durch die poröse Platte dringt. Sowohl kondensierende flüchtige Anteile als auch durch die poröse Platte durchgedrungene Schmelze kann jedoch nicht mehr in die zu behandelnde Polymerschmelze zurückgelangen. Vorteilhaft achtet man darauf, daß die zu behandelnde Polymerschmelze auf die poröse Platte möglichst wenig Druck ausübt.

Die so behandelte Polymerschmelze wird anschließend ausgetragen und geformt, z.B. in Stränge gegossen und granuliert oder direkt zu Formteilen, z.B. Rohren geformt oder einer weiteren Verarbeitungsstufe zugeführt.

Das Verfahren nach der Erfindung führt man vorteilhaft durch in einer Vorrichtung zum Entfernen von flüchtigen Anteilen aus Polymerschmelzen bestehend aus einem Extrudergehäuse 1 mit einer Einlaßöffnung für flüchtige Anteile enthaltende Polymere 2, einer Austragsöffnung 3 und mindestens einer Entgasungsöffnung 4 sowie mindestens einer Schneckenwelle 5, wobei in jeder Entgasungsöffnung 4 eine poröse Platte 6 angeordnet ist, die den gesamten Querschnitt der Entgasungsöffnung abdeckt.

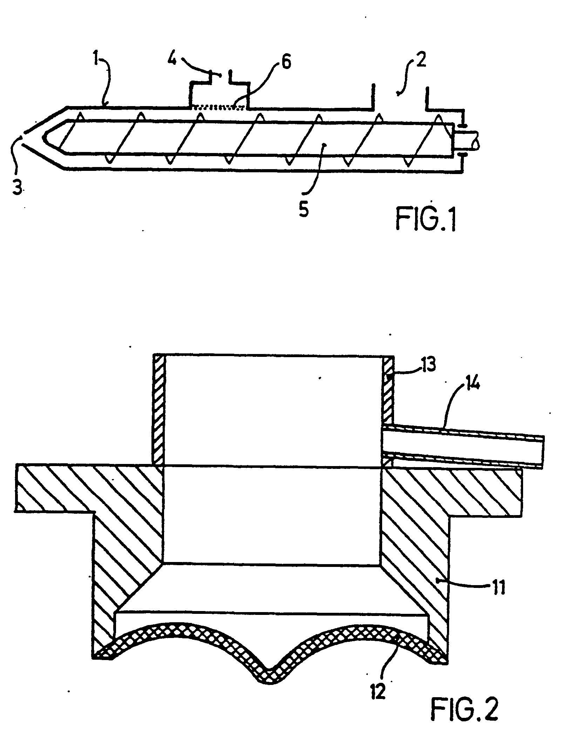

Eine geeignete Vorrichtung wird beispielsweise in Figur 1 gezeigt. In Figur 1 bedeutet

1 ein Extrudergehäuse,

2 eine Einlaßöffnung für flüchtige Anteile enthaltende Polymere,

3 eine Austragsöffnung,

4 eine Entgasungsöffnung zum Ableiten der flüchtigen Anteile,

5 eine Schneckenwelle und

6 eine poröse Platte, die den gesamten Querschnitt der Entgasungsöffnung abdeckt.

Vorteilhaft verwendet man Sinter-Metall-Platten mit einer Porenweite von 5 bis 200 µm und einer Porosität von 25 bis 60%. Vorteilhaft ist die Sinter-Metall-Platte der Form des Extrudergehäuses angepaßt. Es hat sich auch als zweckmäßig erwiesen, daß die Sinter-Metall-Platte senkrecht zur Wellenachse verschiebbar ist und somit der Spalt zwischen Sinter-Metall-Platte und äußerem Schneckendurchmesser regulierbar ist. Vorzugsweise stellt man in Abhängigkeit von der Viskosität der zu behandelnden Schmelze die Spaltweite so ein, daß er die halbe Differenz, die sich zwischen dem Gehäuse und dem äußeren Schneckendurchmesser ergibt, ausmacht.

Für die Entfernung von flüchtigen Anteilen aus Polymerschmelzen sind Extruder mit einer Schneckenwelle oder mehreren Schneckenwellen, z.B. zwei Schneckenwellen geeignet. Im Extrudergehäuse können auch mehrere, z.B. zwei in Richtung auf die Austragsöffnung hintereinander angeordnete Entgasungsöffnungen angewandt werden. Es versteht sich, daß jede Entgasungsöffnung mit einer Sinterplatte, die den gesamten Querschnitt der Entgasungsöffnung Zuführungsöffnungen für Schmiermittel oder Stabilisatoren oder andere Zusätze vorhanden sein.

Eine besonders vorteilhafte Ausführung der Vorrichtung besteht in der Verwendung eines in Figur 2 wiedergegebenenen Einsatzes, der dichtschließend in die Entgasungsöffnung 4 eingeführt wird. In Figur 2 bezeichnet

11 einen Einsatz,

12 eine poröse Platte,

13 einen Anschlußstutzen an die Vakuumleitung zur Abführung der flüchtigen Anteile und 14 eine Austragsöffnung zum Abführen von kondensierten Oligomeren oder Polymeren, die durch die poröse Platte hindurchtreten.

Die Erfindung sei an folgenden Beispielen veranschulicht.

Beispiel 1

Aus einer kontinuierlich arbeitenden Vorrichtung, die unter einem Wasserdampfdruck von ca. 10 bar steht, wird eine Schmelze von Polyamid-66 mit einem Wassergehalt von 1,5 bis 2 Gew.% bei einer Temperatur von 280-C mit einer Geschwindigkeit, entsprechend einem Durchsatz von 50 kg/Stunde, mittels einer Zahnradpumpe in die Zuführungsöffnung eines Entgasungsextruders entspannt. Der Entgasungsextruder ist ein 2-Wellen-Extruder mit Verhältnis von Länge:Durchmesser wie 20:1. Im Verlauf des Extrudergehäuses ist eine Entgasungsöffnung angeordnet, die mit einem Sinter-Metall-Einsatz entsprechend Figur 2 versehen ist. Es versteht sich, daß die Schneckengeometrie den üblichen Arbeitsgängen angepaßt ist. Die Sinter-Metall-Platte ist der Geometrie des Gehäuses angepaßt. Das Spiel zwischen den Schneckenwellen und der Sinter-Metall-Platte beträgt ca. 0,5 mm. Die Sinter-Metall-Platte hat eine Porosität von 30%, eine Porenweite von 20 µm und eine Oberfläche von ca. 80 cm². Die Entgasungsöffnung wird mit einem Unterdruck von 600 mbar beaufschlagt. Beim Passieren der Wasserdampf enthaltenden Polyamid-66-Schmelze wird der Wasserdampf entbunden, passiert die Sinter-Metall-Platte und wird abgezogen. Die abgeführte Gasmenge beträgt ca. 2 Gew.%, bezogen auf die Polymerschmelze. Die Viskosität der zu entgasenden Polymerschmelze beträgt bei 275°C ca. 30 Pas. Der Differenzdruck zwischen der zu entgasenden Schmelze unterhalb des Verdrängers und dem Atmosphärendruck beträgt ca. 40 mm Wassersäule. Die Polymerschmelze entgast unter diesen Bedingungen, ohne störende Polymerablagerung zu hinterlassen, so gut, daß die nachfolgende Verfestigumg der Stränge und die anschließende Granulierung nicht beeinflußt werden. Mit dieser Arbeitsweise konnte ein störungsfreier Dauerbetrieb von ca. 4 Wochen aufrecht erhalten werden.

Beispiel 2

Während eines Konfektioniervorgangs in einem Doppelschneckenextruder (L:D, 45:1) werden dem Polyamid-6 unter Atmosphärendruck ca. 23% Wasser (bezogen auf die Ausgangsstoffe) entzogen. Der Durchsatz an Polymer beträgt dabei 40 kg/h, die Materialtemperatur im Extruder liegt zwischen 260 und 290°C, die Schneckendrehzahl bei 150 U/min. Der Produktzulauf erfolgt im 1. Gehäuseschuß. Die flüchtigen Anteile werden in den folgenden geschlossenen Gehäuseschüssen verdampft und über zwei Sintermetalleinsätze, die dem Schneckenprofil angepaßt sind, abgezogen. Die Entgasungsflächen betragen 80 cm²/Entgasungsöffnung, der Abstand zwischen Sintermetall und Schneckenwelle beträgt 0,5 mm. Der Werkstoff des verwendeten Sintermetalls ist RA4, die Porosiät beträgt 35% bei einer Schichtdicke von 3 mm. Die Schmelzviskosität des verwendeten Polyamid 6 beträgt 120 Pas bei einer Temperatur von 280°C. Der Polymerverlust über die Sintermetalleinsätze beträgt im Dauerbetrieb 0,1%, bezogen auf den Durchsatz. Eine Verschmutzung der Polymerschmelze durch Anwachsungen in den Entgasungsöffnungen ist ausgeschlossen. Während eines Dauerbetriebs von mehr als 48 Stunden konnte eine störungsfreie Entgasung der Polymerschmelze bei einwandfreier Granulierung durchgeführt werden.

## Patentansprüche

1. Verfahren zum Entfernen von flüchtigen Anteilen aus Polymerschmelzen, wobei man die flüchtige Anteile enthaltenden Polymeren unter fortwährender Ausbildung neuer Oberflächen durch mindestens eine Zone, in der die flüchtigen Anteile verdampfen, leitet und die flüchtigen Anteile entfernt, dadurch gekennzeichnet, daß man die flüchtigen Anteile aus der oder den Zonen, in denen die flüchtigen Anteile verdampfen, jeweils durch eine poröse Platte, die eine Vielzahl von Porenöffnungen mit einem Durchmesser von 5 bis 200 µm aufweist, ableitet.

2. Verfahren nach Anspruch 1, dadurch gekennzeichnet, daß man die flüchtigen Anteile durch eine poröse Platte mit einer Porosität von 25 bis 60% ableitet.

3. Vorrichtung zum Entfernen von flüchtigen Anteilen, bestehend aus einem Extrudergehäuse 1 mit einer Einlaßöffnung 2 für flüchtige Anteile enthaltende Polymerschmelzen, einer Austragsöffnung 3, mindestens einer Entgasungsöffnung 4 und mindestens einer Schneckenwelle 5, dadurch gekennzeichnet, daß in jeder Entgasungsöffnung 4 eine poröse Platte 6 angeordnet ist, die den gesamten Querschnitt der Entgasungsöffnung abdeckt, eine Vielzahl Porenöffnungen mit einem Durchmesser von 5 bis 200 µm aufweist, und die poröse Platte senkrecht zu den Schneckenwellen verschiebbar ist und ein Spalt zwischen der porösen Platte und dem äußeren Schneckendurchmesser besteht.

4. Vorrichtung nach Anspruch 3, dadurch gekennzeichnet, daß die poröse Platte der Form des Extrudergehäuses angepaßt ist.

5. Vorrichtung nach den Ansprüchen 3 und 4, dadurch gekennzeichnet, daß der Spalt zwischen poröser Platte und äußerem Durchmesser der Schneckenwelle der halben Differenz aus dem Abstand zwischen Extrudergehäuse und dem äußeren Durchmesser der Schneckenwelle entspricht.

## Revendications

1. Procédé pour l'élimination d'ingrédients volatils de polymères fondus, dans lequel on fait passer les polymères contenant des ingrédients volatils avec formation continue de nouvelles surfaces à travers au moins une zone, dans laquelle les ingrédients volatils sont vaporisés et séparés, caractérisé en ce que les ingrédients volatils sont soutirés de la zone ou des zones, dans laquelle (lesquelles) ils sont vaporisés, à travers une plaque poreuse qui possède une multitude d'ouvertures de pores d'un diamètre de 5 à 200 µm.

2. Procédé suivant la revendication 1, caractérisé en ce que les ingrédients volatils sont soutirés à travers une plaque poreuse d'une porosité de 25 à 60%.

3. Dispositif pour l'élimination d'ingrédients volatils, composé d'un corps d'extrudeuse (1) avec une ouverture d'introduction (2) pour des polymères contenant des ingrédients volatils, une ouverture d'évacuation (3), au moins une ouverture de dégazage (4) et au moins une vis sans fin (5), caractérisé en ce que chaque ouverture de dégazage (4) est pourvue d'une plaque poreuse (6), qui recouvre toute la section de l'ouverture de dégazage, qui possède une multitude d'ouvertures de pores d'un diamètre de 5 à 200 µm et la plaque poreuse peut être déplacée perpendiculairement à la (aux) vis sans fin, et une fente existe entre la plaque poreuse et le diamètre extérieur de la vis sans fin.

4. Dispositif suivant la revendication 3, caractérisé en ce que la plaque poreuse est adaptée à la forme du corps d'extrudeuse.

5. Dispositif suivant les revendications 3 et 4, caractérisé en ce que la fente entre la plaque poreuse et le diamètre extérieur de la vis sans fin correspond à la moitié de la différence de la distance entre le corps d'extrudeuse et le diamètre extérieur de la vis sans fin.

## Claims

1. A process for removing volatile constituents from a polymer melt, in which the polymer containing the volatile constituents is passed through one or more zones in which the volatile constituents evaporate, with continuous formation of fresh surfaces, and the volatile constituents are removed, which comprises removing the volatile constituents from each of the zone(s) where they evaporate through a porous plate which has a plurality of pore openings from 5 to 200 µm in diameter.

2. A process as claimed in claim 1, wherein the volatile constituents are removed via a porous plate having a porosity of from 25 to 60%.

3. Apparatus for removing volatile constituents, which comprises an extruder barrel 1 having a feed orifice 2 for a polymer containing volatile constituents, a discharge orifice 3, and one or more venting orifices 4 as well as one or more screws 5, wherein a porous plate 6 covering the entire cross-section of the venting orifice and having a plurality of pore openings from 5 to 200 µm in diameter is arranged in each venting orifice and the porous plate is movable at right angles to the screws and there is a gap between the porous plate and the external diameter of the screw.

4. Apparatus as claimed in claim 3, wherein the porous plate matches the shape of the extruder barrel.

5. Apparatus as claimed in claims 3 and 4, wherein the gap between the porous plate and the external diameter of the screw corresponds to half the distance between the extruder barrel and the external diameter of the screw.

EP 0 120 447 B2

FIG.1

FIG.2